# EUROPEAN PATENT APPLICATION

(11) **EP 4 660 209 A1**
(43) Date of publication of application: **10.12.2025**
(21) Application number: 24750141.4
(22) Date of filing: 26.01.2024
(51) Int. Cl.: C08F 220/12, C08K 5/34, C08L 33/08

(54) **RESIN COMPOSITION, CURABLE COMPOSITION, CURED BODY, OPTICAL ARTICLE, RUBBER SHEET, EYE PROTECTION ARTICLE, AND ANTI-BACTERIAL/ANTI-VIRUS AGENT**

(30) Priority: 31.01.2023 JP 2023013047
(71) Applicant: TOKUYAMA CORPORATION, Yamaguchi 745-8648 (JP)
(72) Inventor: KAWASAKI Takayoshi, Shunan-shi, Yamaguchi 745-8648 (JP); MARUMOTO Hayato, Shunan-shi, Yamaguchi 745-8648 (JP); SHIINE Tsubasa, Shunan-shi, Yamaguchi 745-8648 (JP)
(74) Representative: Papula Oy
(86) International application number: PCT/JP2024/002349
(87) International publication number: WO 2024/162192

(57) **Abstract**

Provided is a resin composition that includes bismuth and a (meth)acryl resin, and has a Shore D hardness of 70 or less which is measured in accordance with JIS K 7215. Also provided are a curable composition that makes it possible to obtain said resin composition, a cured body of said curable composition, as well as an optical article, a rubber sheet, an eye protection article, and an anti-bacterial/anti-virus agent that include said curable body.

## Description

### TECHNICAL FIELD

The present invention relates to a resin composition, a curable composition, a cured product, an optical article, a rubber sheet, an eye protector, and an antibacterial or antiviral agent.

### BACKGROUND ART

The International Commission on Radiological Protection (ICRP) has alerted that radiation has a risk of causing cataract, in response to which in Japan, the Regulation on Prevention of Ionizing Radiation Hazards has been amended to lower the equivalent dose limit for eye lenses of radiation workers, which has been enforced from April 2021. To reduce the risk, radiation workers are strongly recommended to use appropriate eye protectors effectively.

Eye protective shield materials generally include lead glass and lead acrylic (for lightweight products). However, lead is harmful to the environment and human health, and there is a strong demand for lead-free alternative shield materials based on inorganic glass or resin. Some alternatives to lead include bismuth, barium, antimony, tin, and tungsten. In particular, bismuth-containing materials have been investigated. Bismuth, which has been used as a gastrointestinal drug for a long time, is harmless to the human body. Bismuth has the same ability to shield radiation as lead and thus is a suitable alternative to lead.

In general, bismuth compounds have low solubility in organic solvents containing polymerizable monomers, and they have limited applications. Recently, it has been reported that a cured product with sufficient optical transparency can be produced using a composition including: a bismuth compound having a (meth)acryloyl group-containing phosphate ester moiety bonded to bismuth; and a radically polymerizable monomer which is not a bismuth compound (see Patent Documents 1 and 2). Such a cured product, which includes a resin matrix containing bismuth components dispersed at a high concentration, has a high ability to shield not only X-rays for medical use but also other types of radiation such as β rays, and can be used to form radiation-shielding eyeglass lenses, shielding materials, screens, observation windows, and other products.

Bismuth compounds are also known to have antibacterial and antiviral properties and can be used as antibacterial or antiviral structural or coating materials. Such applications do not necessarily require transparency.

### Citation List

### Patent Document

Patent Document 1: PCT International Publication No. WO2022/014591
Patent Document 2: PCT International Publication No. WO2019/177084

### DISCLOSURE OF THE INVENTION

### Problems to be Solved by the Invention

It is an object of the present invention to provide a low-hardness resin composition; a curable composition capable of producing the low-hardness resin composition; a cured product resulting from curing of the curable composition; and an optical article, a rubber sheet, an eye protector, and an antibacterial or antiviral agent each including the cured product.

### Means for Solving the Problems

Specific solutions to the problem described above include the following aspects.
<1> A resin composition including: bismuth; and a (meth)acrylic resin, and
   having a Shore D hardness of 70 or less as measured in accordance with JIS K 7215.
<2> The resin composition according to <1>, in which the resin composition has a Shore D hardness of 20 or more and 60 or less.
<3> The resin composition according to <1> or <2>, in which the resin composition exhibits an elastic modulus of 5 MPa or more and 50 MPa or less when shaped into a test piece with a length of 100 mm, a width of 20 mm, and a thickness of 5.7 mm and pulled at one end at a rate of 10 mm/minute using a tensile tester.
<4> The resin composition according to any one of <1> to <3>, in which the resin composition has a bismuth content of 20 mass% or more and 50 mass% or less as analyzed by highfrequency inductively coupled plasma emission spectrometry.
<5> A curable composition including: a first bismuth compound including bismuth and a (meth)acryloyl group; and at least one polymerizable compound excluding the first bismuth compound,
   the at least one polymerizable compound including a monofunctional acrylate,
   the curable composition having a first bismuth compound content of 10 mass% or more and 65 mass% or less,
   the curable composition having a monofunctional methacrylate content of 20 mass% or less.
<6> The curable composition according to <5>, in which the curable composition has a monofunctional acrylate content of 10 mass% or more and 80 mass% or less.
<7> The curable composition according to <5> or <6>, in which a ratio M1/M6 of a mass M1 of the first bismuth compound to a mass M6 of the monofunctional acrylate is 0.25 or more and 5.5 or less.
<8> The curable composition according to any one of <5> to <7>, in which the curable composition has a first bismuth compound content of 30 mass% or more and 55 mass% or less.
<9> The curable composition according to any one of <5> to <8>, in which the first bismuth compound includes a compound having two or more (meth)acryloyl groups.
<10> The curable composition according to any one of <5> to <9>, in which the curable composition has a monofunctional methacrylate content of 10 mass% or less.
<11> The curable composition according to any one of <5> to <10>, in which the monofunctional acrylate includes a compound represented by Formula (I): 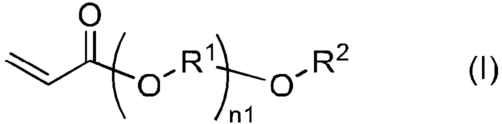 wherein
   R¹ is an alkylene group having 1 or more and 5 or less carbon atoms,
   R² is a hydrogen atom or an alkyl group having 1 or more and 5 or less carbon atoms and may form a tetrahydrofurfuryl group together with an adjacent oxygen atom, and
   n1 is an integer of 0 or more and 30 or less.
<12> The curable composition according to any one of <5> to <11>, in which the at least one polymerizable compound further includes a polyfunctional (meth)acrylate having two or more (meth)acryloyl groups.
<13> The curable composition according to <12>, in which the curable composition has a polyfunctional (meth)acrylate content of 10 mass% or more and 35 mass% or less.
<14> The curable composition according to <12> or <13>, in which the polyfunctional (meth)acrylate includes a bifunctional (meth)acrylate represented by Formula (II): 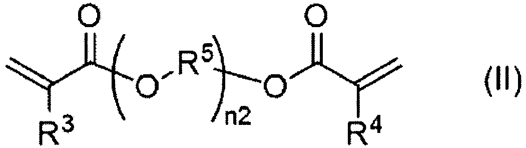 wherein
   R³ and R⁴ are each independently a hydrogen atom or a methyl group,
   R⁵ is a linear or branched alkylene group having 1 or more and 10 or less carbon atoms, and
   n2 is an integer of 1 or more and 50 or less.
<15> The curable composition according to any one of <5> to <14>, further including a coordinating organic compound having an acid dissociation constant pKa of 2.0 or more and 15.0 or less.
<16> The curable composition according to <15>, in which the coordinating organic compound includes at least one selected from the group consisting of an imidazole skeleton-containing compound, a pyrazole skeleton-containing compound, a triazole skeleton-containing compound, and a tetrazole skeleton-containing compound.
<17> A cured product including a product resulting from curing of the curable composition according to any one of <5> to <16>.
<18> An optical article including the cured product according to <17>.
<19> A rubber sheet including the cured product according to <17>.
<20> An eye protector including the cured product according to <17>.
<21> An antibacterial or antiviral agent including the cured product according to <17>.

### Effects of the Invention

The present invention provides a low-hardness resin composition; a curable composition capable of producing the low-hardness resin composition; a cured product resulting from curing of the curable composition; and an optical article, a rubber sheet, an eye protector, and an antibacterial or antiviral agent each including the cured product.

### PREFERRED MODE FOR CARRYING OUT THE INVENTION

Bismuth-containing optical lenses with high transparency, high surface smoothness, and high optical uniformity can be produced using the same method as for conventional plastic lenses. For example, a method for producing a bismuth-containing optical lens may include casting a bismuth compound-containing polymerizable composition into a glass mold; and polymerizing the composition by thermal polymerization using a thermal polymerization initiator, photopolymerization using a photopolymerization initiator, or a combination thereof.

For example, however, for protection of eye lenses from scattered X-rays, eyes should also be protected against X-rays from below and side. Conventional near-flat eyeglass lenses cannot achieve such protection against X-rays from below and side.

In this regard, thermoplastic resin such as polycarbonate resin can be freely shaped into protective eye goggles through injection of molten resin into metal molds. Such eye goggles have a high-curvature shape that can fit around the face so that they can protect eyes against rays from multiple directions.

Unfortunately, such high-curvature eye goggles with a large protective area are not easy to produce from thermosetting resin. Issues, such as insufficient contact of thermosetting resin to the mold surface or otherwise transfer of mold surface irregularities to highly sensitive thermosetting resin and polymerization shrinkage-induced peeling or cracking, make it technically challenging to form optically uniform cured products. Furthermore, the current facility for manufacturing glass molds for optical materials cannot handle large-area or special-shape products, and developing a new facility will require significant costs and time, which is a practical problem.

After the curing of thermosetting resin, the cured product can be thermally processed into a final desired shape. Unfortunately, when a polyfunctional monomer is used to form a thermosetting resin, the polyfunctional monomer unit can act to crosslink the resin and thus to degrade the thermal processability of the resin, so that even if the shape of the resin product can be thermally adjusted, the resin product can return to its original shape over time, which is another problem. To avoid or mitigate this problem, mild initial thermosetting conditions may be used so that the cured product can have increased thermal processability. In such a case, however, the resulting cured product may have significantly reduced physical properties, such as significantly reduced impact resistance.

As described above, conventional thermosetting resins having physical properties suitable for plastic lenses are difficult to shape in any desired size or form.

On the other hand, there is a demand for a highly-flexible, large-area, radiation shielding material for protecting doctors and nurses from scattered X-rays from X-ray IVR (interventional radiology) or for protecting, from β rays or X-rays, workers engaged in decommissioning work or other activities at nuclear power plants. Radiation shielding rubber sheets produced through kneading rubber and metal fillers are already commercially available. Unfortunately, such shielding materials have limited applications due to their lack of transparency.

An embodiment provides a resin composition. The resin composition includes bismuth and a (meth)acrylic resin and has a Shore D hardness of 70 or less as measured in accordance with JIS K 7215.

Another embodiment provides a curable composition. The curable composition includes a first bismuth compound including bismuth and a (meth)acryloyl group; and at least one polymerizable compound including a monofunctional acrylate and excluding the first bismuth compound. The curable composition has a first bismuth compound content of 10 mass% or more and 65 mass% or less. The curable composition has a monofunctional methacrylate content of 20 mass% or less.

The curable composition according to an embodiment includes the first bismuth compound and the monofunctional acrylate as the polymerizable compound and has a low monofunctional methacrylate content. The curable composition with such features can produce a low-hardness, flexible resin composition (cured product). Such a resin composition has high formability and thus can form bismuth-containing optical articles with a large area and a desired shape. Such optical articles are suitable for use as radiation shielding materials for the protective eye goggles and other products.

Bismuth compounds are also known to have antibacterial and antiviral properties. Thus, the resin composition according to an embodiment can be used as a transparent, antibacterial or antiviral, structural or coating material.

As used herein, the term "(meth)acrylic resin" means both "acrylic resin" and "methacrylic resin". The same applies to similar terms such as "(meth)acryloyl" and "(meth)acrylate".

### <<Curable Composition>>

The curable composition according to an embodiment includes a first bismuth compound including bismuth and a (meth)acryloyl group; and at least one polymerizable compound including a monofunctional acrylate and excluding the first bismuth compound and has a first bismuth compound content of 10 mass% or more and 65 mass% or less and a monofunctional methacrylate content of 20 mass% or less.

Hereinafter, each of components that may be used for the curable composition according to an embodiment will be described. Regarding each type of component described below, the curable composition may contain one component of any one type or a combination of two or more components of any one type.

### <First Bismuth Compound>

The first bismuth compound includes bismuth and at least one selected from the group consisting of an acryloyl group and a methacryloyl group. The first bismuth compound, which includes bismuth, is useful as a radiation shielding material. The term "radiation" includes electromagnetic radiation and particle radiation. The term "electromagnetic radiation" includes X-rays and y rays. The term "particle radiation" includes α rays, β rays, neutron rays, and proton beams. The first bismuth compound has high X-ray shielding performance and is particularly suitable for use as an X-ray shielding material or as a material for shielding β rays, which can produce X-rays.

The first bismuth compound has high solubility in a radically polymerizable compound having at least one radically polymerizable group selected from the group consisting of a nitrile group, an acryloyl group, a methacryloyl group, a vinyl group, and an allyl group. Therefore, using the first bismuth compound makes it possible to obtain a curable composition with a high bismuth content and to obtain a cured product with a high bismuth content. The first bismuth compound has higher solubility in a radically polymerizable compound than bismuth subsalicylate alone.

The first bismuth compound may be any type of compound including bismuth and a (meth)acryloyl group. In the compound, for example, bismuth may be bonded to the (meth)acryloyl group directly or via a linking group. The linking group may include, for example, an oxygen atom, a sulfur atom, a nitrogen atom, or a phosphate group.

The first bismuth compound preferably further has a phosphate bond. The first bismuth compound more preferably includes bismuth and a (meth)acryloyl group-containing first phosphate ester moiety bonded to bismuth. Such a first bismuth compound tends to be more compatible with various polymerizable compounds. The first phosphate ester moiety and bismuth may be bonded through any type of bonding, such as ionic bonding, coordination bonding, or covalent bonding. Specifically, the first bismuth compound may be a phosphate or complex salt including a bismuth cation (Bi³⁺ or Bi⁵⁺) and a first phosphate ester anion or may be a phosphorylated compound or complex.

The first bismuth compound may be a mono(meth)acrylate having one (meth)acryloyl group, a di(meth)acrylate having two (meth)acryloyl groups, a tri(meth)acrylate having three (meth)acryloyl groups, or a polyfunctional (meth)acrylate having four or more (meth)acryloyl groups.

The first bismuth compound may include, for example, a first phosphate ester moiety represented by Formula (2) below.

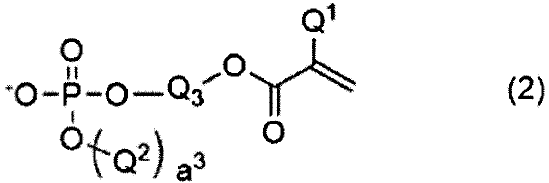

In Formula (2), Q¹ is a hydrogen atom or a methyl group. Q¹ is preferably a methyl group.

In Formula (2), Q² is a hydrogen atom, a linear or branched alkyl group having 1 or more and 10 or less carbon atoms, an aryl group having 4 or more and 16 or less carbon atoms, or a (meth)acryloyloxyalkylene group. The alkyl group preferably has 1 or more and 6 or less carbon atoms. The aryl group preferably has 5 or more and 8 or less carbon atoms. The aryl group is preferably a phenyl group. The alkylene group in the (meth)acryloyloxyalkylene group typically has 1 or more and 10 or less carbon atoms, preferably 1 or more and 3 or less carbon atoms. The (meth)acryloyloxyalkylene group is preferably a (meth)acryloyloxyethylene group.

In Formula (2), a³ is 0 or 1. When a³ is 0, the oxygen atom bonded to Q² is in the form of O⁻.

In Formula (2), Q³ is a linear or branched alkylene group having 1 or more and 10 or less carbon atoms or a linear or branched alkyleneoxyalkylene group having 2 or more and 10 or less carbon atoms.

The first bismuth compound may further include an additional compound moiety bonded to bismuth in addition to the first phosphate ester moiety. Bismuth and the additional compound moiety may be bonded through any of ionic bonding, coordination bonding, or covalent bonding. Specifically, the first bismuth compound may be a phosphate or complex salt including a bismuth cation (Bi³⁺ or Bi⁵⁺), a first phosphate ester anion, and an additional compound moiety anion or may be a phosphorylated compound or complex.

Examples of the additional compound include at least one selected from the group consisting of salicylic acid and (meth)acrylic acid.

To have improved solubility in a radically polymerizable compound, the first bismuth compound preferably have a molar ratio of the additional compound moiety to the first phosphate ester moiety of 0.1 to 10, more preferably 0.1 to 5, even more preferably 0.1 to 1, furthermore preferably 0.1 to 0.5. The first bismuth compound may include two or more first phosphate ester moieties. In such a case, the above molar ratio range is based on the total number of moles of the first phosphate ester moieties.

The bonding between the first phosphate ester moiety and bismuth can be confirmed by infrared (IR) spectroscopy. Specifically, the first bismuth compound may be determined to have bonding between the first phosphate ester moiety and bismuth when the infrared spectroscopy of the first bismuth compound shows a peak at 1670-1700 cm⁻¹. This peak is considered characteristic of stretching vibration in Bi-O-P. This peak is not observed in bismuth or the first phosphate ester before they are bonded together. This peak is also not observed in a mixture of the first phosphate ester and a second bismuth compound, which can be used as a raw material for the first bismuth compound as described below.

For example, the IR spectrum may be measured using Spectrum One manufactured by PerkinElmer under the conditions of single reflection ATR and a number of scans of 4.

In addition, the number of bonded salicylic or (meth)acrylic acid moieties and the number of bonded phosphate ester moieties of each type in the first bismuth compound can be determined by a combination of NMR (nuclear magnetic resonance spectroscopy), MALDI-TOF-MS (matrix-assisted laser desorption ionization time-of-flight mass spectrometry), XPS (X-ray photoelectron spectroscopy), and EDS (energy dispersive X-ray spectroscopy) for elemental analysis and so on.

¹H-NMR and ³¹P-NMR measurements may be performed using a nuclear magnetic resonance spectrometer (JNM-ECA400II manufactured by JEOL), deuterated acetone (solvent), and a sample concentration of 1 mass%.

XPS measurement may be performed using an X-ray photoelectron spectrometer (ESCA5701ci/MC manufactured by ULVAC-PHI), a monochromatized Al-Kα X-ray source (14 kV-330W), an aperture diameter of φ800 µm, and a photoelectron extraction angle of 45 degrees. The sample may be crushed in an agate mortar, and the resulting powder may be fixed to a substrate with a carbon tape and then introduced into the chamber for measurement.

The first bismuth compound preferably further has a phenyl group. The first bismuth compound having a phenyl group tends to have high compatibility with a radically polymerizable monomer. The presence of a phenyl group in the first bismuth compound can be confirmed, for example, by FT-IR (Fourier transform infrared spectroscopy).

The first bismuth compound may be, for example, a phosphate or complex salt represented by Formula (1) below.

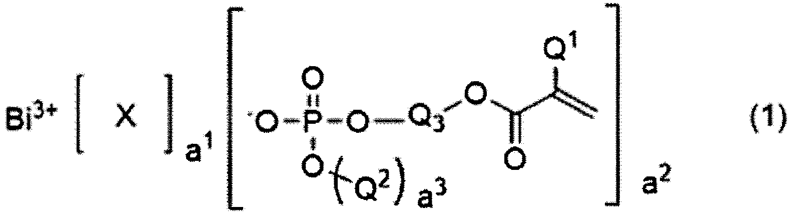

In Formula (1), Q¹, Q², Q³, and a³ are the same as in Formula (2).

In Formula (1), X is a (meth)acrylic acid moiety represented by Formula (1a) below or a salicylic acid moiety represented by Formula (1b) below. In Formula (1a), R is a hydrogen atom or a methyl group. X is preferably a salicylic acid moiety represented by Formula (1b) below.

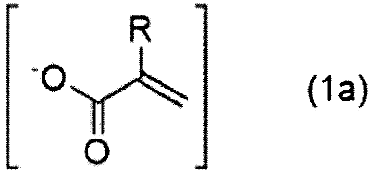

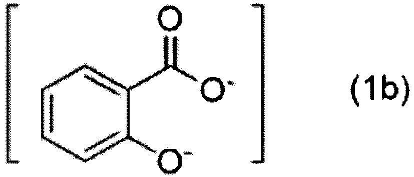

In Formula (1), a¹ is a number of 0 or more and 1 or less, a² is a number of 0.1 or more and 3 or less, and a¹ + a² is a number of 2 or more and 3 or less.

Whether the first bismuth compound has the structure of Formula (1) may be confirmed by detecting the protonated molecular ion or sodium adduct molecular ion of the compound in MALDI-TOF-MS measurement. For example, a protonated molecular ion with an m/z of 667 can be detected in the measurement of the first bismuth compound of Formula (1) with a¹ being a number of 0 or more and 1 or less, X being a salicylic acid moiety, a² being a number of 1 or more and 3 or less, Q¹ being a methyl group, Q² being a methacryloyloxyalkyl group, and Q³ being a linear alkyl group having 2 carbon atoms.

The MALDI-TOF-MS measurement may be performed using a Bruker rapifleX TOF/TOF instrument; a matrix of CHCA (α-cyano-4-hydroxycinnamic acid), DIT (dithranol), and DHB (2,5-dihydroxybenzoic acid); and sodium trifluoroacetate (cationizing agent). The measurement may be performed in the reflector/positive mode with a mass (m/z) range of 20 to 4000.

The first bismuth compound may be a mixture of two or more first phosphate esters bonded to bismuth and two or more additional compounds bonded to bismuth. The first bismuth compound preferably includes a first phosphate ester moiety having one (meth)acryloyl group; another first phosphate ester moiety having two (meth)acryloyl groups; and bismuth to which both of the first phosphate ester moieties are bonded. The first bismuth compound with such a structure tends to be highly compatible with a polymerizable compound.

In the first bismuth compound with such a structure, the molar ratio of the first phosphate ester moiety having two (meth)acryloyl groups to the first phosphate ester moiety having one (meth)acryloyl group is preferably 0.05 to 3, more preferably 0.10 to 2, even more preferably 0.15 to 1.

Preferred examples of the first bismuth compound include compounds represented by Formulas (III), (IV), and (V) below.

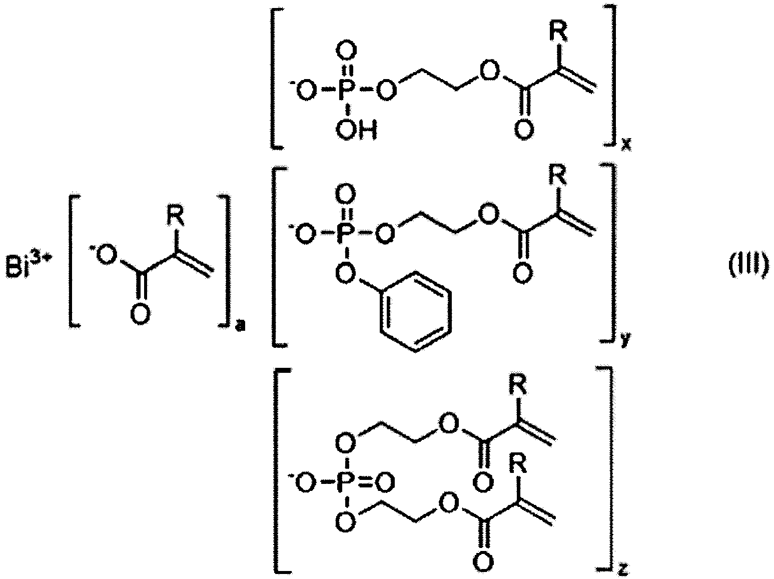

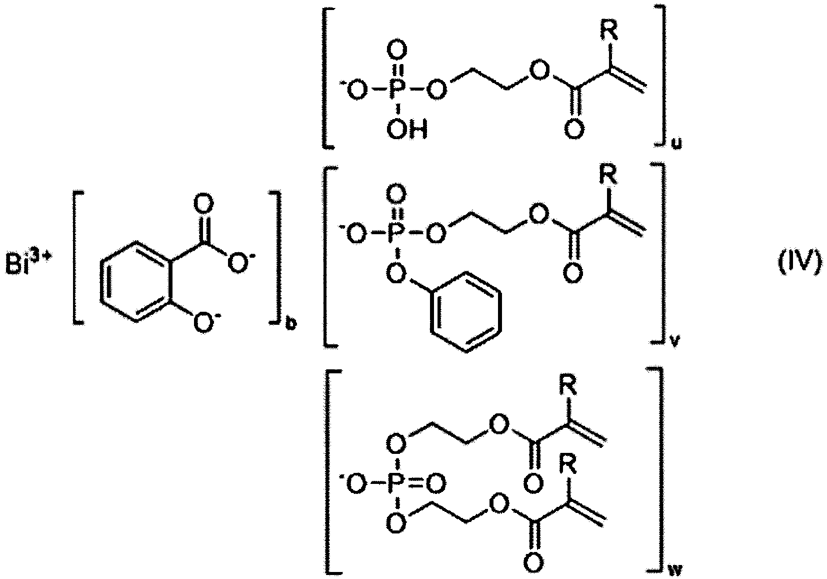

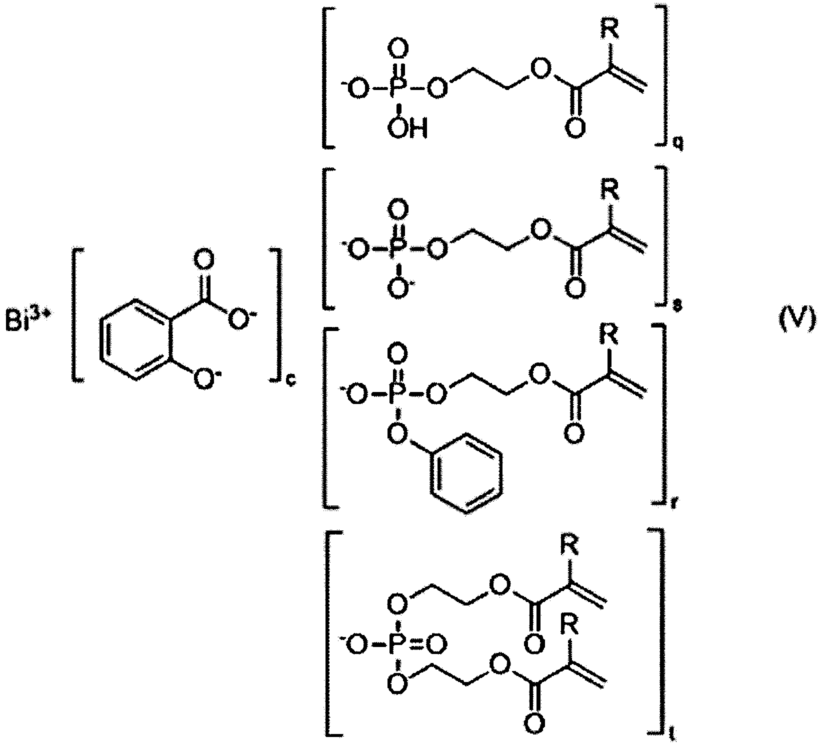

In the formulas, R's are each independently a hydrogen atom or a methyl group.

In Formula (III), a + x + y + z = 3, x indicates the number of moles of the 2-((meth)acryloyloxy)ethyl hydrogen phosphate residue, y indicates the number of moles of the 2-((meth)acryloyloxy)ethyl phenyl phosphate residue, z indicates the number of moles of the bis[2-((meth)acryloyloxy)ethyl] phosphate residue, and a indicates the number of moles of the (meth)acrylic acid residue.

In Formula (IV), 2b + u + v + w = 3, u indicates the number of moles of the 2-((meth)acryloyloxy)ethyl hydrogen phosphate residue, v indicates the number of moles of the 2-((meth)acryloyloxy)ethyl phenyl phosphate residue, w indicates the number of moles of the bis[2-((meth)acryloyloxy)ethyl] phosphate residue, and b indicates the number of moles of the salicylic acid residue.

In Formula (V), 2c + q + r + 2s + t = 3, q indicates the number of moles of the 2-((meth)acryloyloxy)ethyl hydrogen phosphate residue, r indicates the number of moles of the 2-((meth)acryloyloxy)ethyl phenyl phosphate residue, s indicates the number of moles of the 2-((meth)acryloyloxy)ethyl phosphate residue, t indicates the number of moles of the bis[2-((meth)acryloyloxy)ethyl] phosphate residue, and c indicates the number of moles of the salicylic acid residue.

In this regard, each of Formulas (III) to (V) may represent a mixture of two or more first bismuth compounds rather than a single first bismuth compound. In such a case, the number of moles of each residue defined above indicates the number of moles of each residue in the entire mixture.

For low-temperature production of the first bismuth compound with less coloration, Formula (III) with a = 0 preferably has an x:y:z ratio of 1:0.05-3:0.5-30, more preferably 1:0.1-2:1-20, even more preferably 1:0.15-1:1.5-10. For much less coloration, a may be 0, and y may be 0.

Formula (III) with a being not 0 preferably has an a:(x + y + z) ratio of 0.1-10:1, more preferably 0.1-5:1, even more preferably 0.1-1:1. In this case, the x:y:z ratio is preferably 1:0.05-3:0.5-30, more preferably 1:0.1-2:1-20, even more preferably 1:0.15-1:1.5-10.

When x, y, and z are respectively replaced by u, v, and w, the same description applies to Formula (IV) with b = 0.

In addition, Formula (IV) with b being not 0 preferably has a b:(u + v + w) ratio of 1:0.1-30, more preferably 1:0.2-20, even more preferably 1:0.3-10, furthermore preferably 1:0.5-5. In this case, the u:v:w ratio is preferably 1:0.05-20:0.1-40, more preferably 1:0.1-10:0.2-20, even more preferably 1:0.2-5:0.4-10.

Formula (V) with c = 0 preferably has a q:r:s:t ratio of 1:0.1-50:0.05-20:0.1-40, more preferably 1:0.3-30:0.1-10:0.2-20, even more preferably 1:0.5-20:0.2-5:0.4-10.

Formula (V) with c being not 0 preferably has a c:(q + r + s + t) ratio of 1:0.1-30, more preferably 1:0.2-20, even more preferably 1:0.3-10, furthermore preferably 1:0.5-5. In this case, the q:r:s:t ratio is preferably 1:0.1-50:0.05-20:0.1-40, more preferably 1:0.3-30:0.1-10:0.2-20, even more preferably 1:0.5-20:0.2-5:0.4-10.

The first bismuth compound may be, for example, a phosphate or complex salt represented by Formula (3) below.

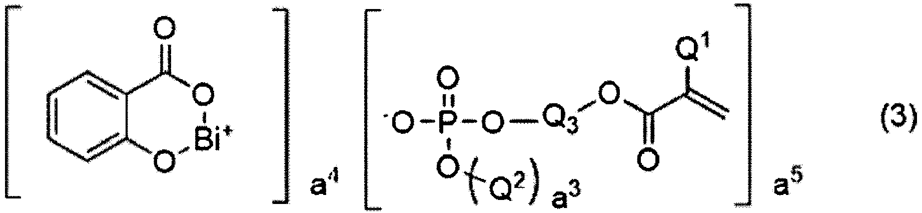

In Formula (3), Q¹, Q², Q³, and a³ are the same as in Formula (2).

In Formula (3), a⁴ is a number of more than 0 and 3 or less, a⁵ is a number of more than 0 and 3 or less, and a⁴ + a⁵ is 3.

The first bismuth compound preferably includes at least one compound selected from the group consisting of compounds represented by Formulas (3a), (3b), (3c), and (3d) below. The first bismuth compound more preferably includes a compound represented by Formula (3a) below.

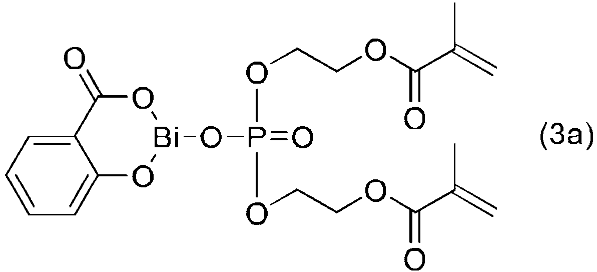

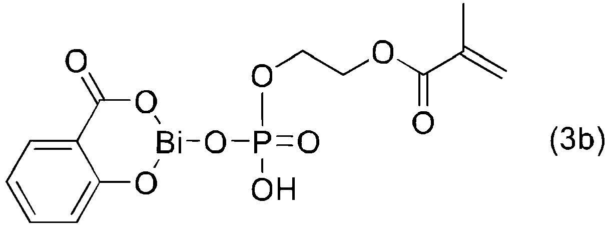

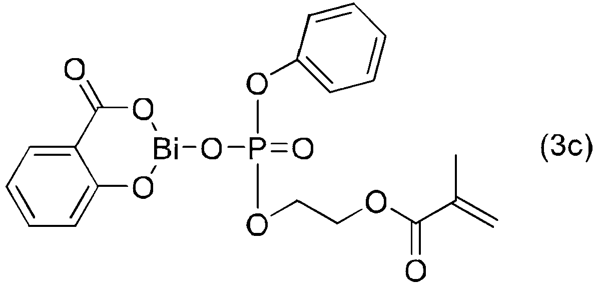

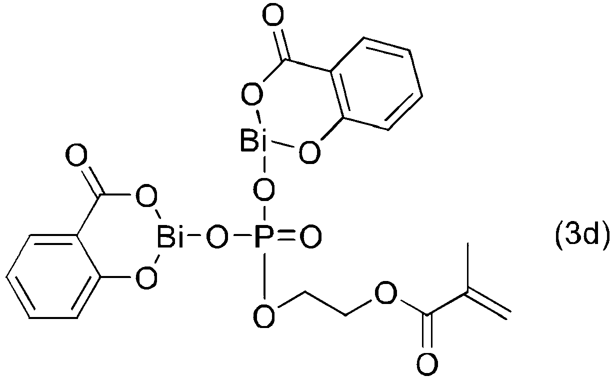

The first bismuth compound may also be a composition including the first bismuth compound and an additional compound other than the first bismuth compound. Hereinafter, such a composition will also be referred to as the first bismuth composition. The first bismuth composition may contain a phosphate compound by-product or an unreacted raw material.

Removing the phosphate compound by-product or unreacted raw material from the first bismuth compound will industrially require a large amount of labor. In addition, the phosphate compound by-product or unreacted raw material can contribute to improving the solubility of the first bismuth compound in a radically polymerizable monomer.

Examples of the phosphate compound by-product include dimers of a phosphate ester with one (meth)acryloyl group (phosphoric monoester), dimers of a phosphate ester with two (meth)acryloyl groups (phosphoric diester), and esters between bismuth salicylate or bismuth (meth)acrylate and phosphoric acid.

Examples of the unreacted raw material include a phosphate ester with one (meth)acryloyl group (phosphoric monoester), a phosphate ester with two (meth)acryloyl groups (phosphoric diester), bismuth salicylate, and bismuth (meth)acrylate.

The first bismuth composition may contain, for example, 30 mass% or less of the additional compound other than the first bismuth compound. The content of the additional compound in the first bismuth composition may have no lower limit. The lower limit of the additional compound content may be 0 mass% in an example and may be 5 mass% in another example. The additional compound content can be determined by an internal reference method using ¹H NMR to quantify the phosphate compound by-product and the unreacted raw material in the first bismuth composition.

The first bismuth composition may also contain a compound derived from bismuth oxide. For example, the bismuth oxide-derived compound can be produced by a bonding reaction between bismuth oxide and a (meth)acryloyl group-containing phosphate ester, a (meth)acrylic acid, and/or a salicylic acid. The structure of the bismuth oxide-derived compound may have bonds between the hydroxy group on the bismuth oxide surface and the carboxy group of the phosphate ester, (meth)acrylic acid, or salicylic acid, although it still remains to be clarified. The bismuth oxide-derived compound is very difficult to separate from the first bismuth compound. Thus, when the first bismuth composition as produced contains the bismuth oxide-derived compound as a by-product, it should preferably be used as is. The conditions for the production of the first bismuth composition should preferably be controlled to adjust the amount of the bismuth oxide-derived compound by-product within a range where the first bismuth composition can be prevented from having reduced solubility. The presence of the bismuth oxide-derived compound in the composition can be comprehensively determined from the production conditions or the results of IR, NMR, and XPS measurements.

The first bismuth composition may contain at least one compound selected from the group consisting of compounds represented by Formulas (3e) and (3f) below.

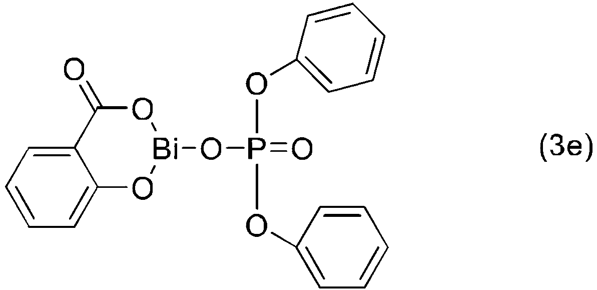

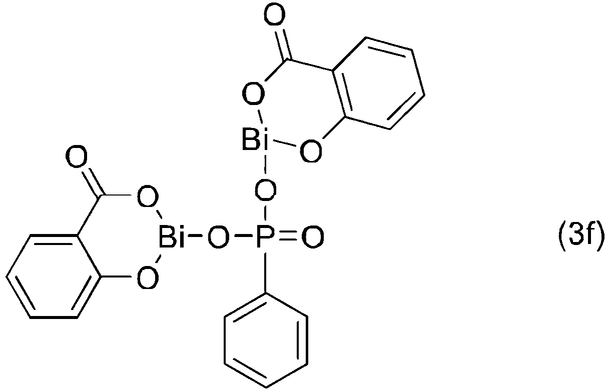

### [Method for Producing the First Bismuth Compound]

The first bismuth compound may be produced by any suitable method. Preferably, the first bismuth compound is produced by a method including reacting a first phosphate ester with a second bismuth compound. Specifically, the first bismuth compound is preferably produced by a method including: reacting a first phosphate ester and a second bismuth compound in an aliphatic hydrocarbon solvent or an aromatic solvent optionally in the presence of a polymerization inhibitor; and removing water from the reaction system.

The term "second bismuth compound" refers to a bismuth-containing organic compound. The second bismuth compound may include bismuth (meth)acrylate or bismuth subsalicylate. Bismuth (meth)acrylate or bismuth subsalicylate may be any suitable type, such as a commercially available product.

Bismuth subsalicylate is a compound of Formula (VI) below having bismuth bonded to the salicylic acid-derived moiety.

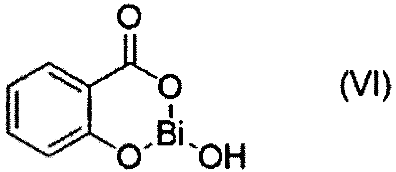

Bismuth subsalicylate may be produced by any suitable method such as a method known in the art.

The first phosphate ester may be a commercially available product. The first phosphate ester may be a phosphate ester having one (meth)acryloyl group, a phosphate ester having two (meth)acryloyl groups, or a mixture of them.

Examples of the phosphate ester having one (meth)acryloyl group include 2-(methacryloyloxy)ethyl dihydrogen phosphate and diphenyl-2-methacryloyloxyethyl phosphate.

Examples of the phosphate ester having two (meth)acryloyl groups include bis[2-(methacryloyloxy)ethyl] hydrogen phosphate and [2-(methacryloyloxy)ethyl] phenyl hydrogen phosphate.

For improved compatibility, the first phosphate ester to be added preferably further includes a phosphate triester, such as diphenyl-2-methacryloyloxyethyl phosphate, bis[2-(methacryloyloxyethyl) phenyl phosphate, or tris[2-(methacryloyloxyethyl) phosphate. Using a phenyl group-containing phosphate triester makes it possible to successfully introduce, into the compounds of Formulas (III) to (V), a monovalent phenyl phosphate diester having one (meth)acryloyl group.

The phosphate triester is preferably used in an amount of 0.1 to 20 moles, more preferably 0.2 to 5 moles, relative to 1 mole of the total amount of the phosphate ester having one (meth)acryloyl group and the phosphate ester having two (meth)acryloyl groups.

The amount of the first phosphate ester to be reacted may be determined such that the desired first bismuth compound can be obtained. Specifically, 1 mole of the second bismuth compound is preferably reacted with 0.3 to 10 moles of the first phosphate ester.

### (Aliphatic Hydrocarbon Solvent or Aromatic Solvent)

In an embodiment, the second bismuth compound and the first phosphate ester are preferably mixed and stirred in an aliphatic hydrocarbon solvent or an aromatic solvent for the reaction between them. During the process, water produced in the reaction system is preferably removed therefrom. For easy removal of the produced water, the aliphatic hydrocarbon solvent or the aromatic solvent preferably has a high boiling point, specifically a boiling point of 100°C or more. A mixed solution including a mixture of the aliphatic hydrocarbon solvent and the aromatic solvent may also be used.

Examples of the aliphatic hydrocarbon solvent and the aromatic solvent include hexane, heptane, nonane, decane, undecane, dodecane, xylene, dimethoxybenzene, and isomers thereof; and benzene, toluene, chlorobenzene, bromobenzene, anisole; petroleum ether, petroleum benzine, and benzoin.

The aliphatic hydrocarbon solvent or the aromatic solvent may be used in any amount sufficient to form a mixture including the second bismuth compound and the first phosphate ester. For high productivity of the first bismuth compound, 5 to 100 mL of the aliphatic hydrocarbon solvent or aromatic solvent is preferably used per 1 g of the second bismuth compound.

### (Reaction Conditions)

Any appropriate method may be used to introduce the second bismuth compound and the first phosphate ester into the reaction system. For example, a method includes adding together the second bismuth compound, optionally diluted with an aliphatic hydrocarbon solvent or aromatic solvent, and the first phosphate ester, optionally diluted with an aliphatic hydrocarbon solvent or aromatic solvent, to the reaction system; and mixing and stirring them. Another method includes preliminarily introducing an aliphatic hydrocarbon solvent or aromatic solvent into the reaction system; then adding together the second bismuth compound, optionally diluted with an aliphatic hydrocarbon solvent or aromatic solvent, and the first phosphate ester, optionally diluted with an aliphatic hydrocarbon solvent or aromatic solvent, to the reaction system; and stirring and mixing them. A further method includes preliminarily introducing one of the materials into the reaction system; then introducing the other material into the reaction system; and stirring and mixing them. In particular, the first bismuth compound is preferably produced using the method described below so that it can be produced with improved productivity and less coloration. First, the second bismuth compound is dispersed in an aliphatic hydrocarbon solvent or aromatic solvent. If the second bismuth compound is insoluble in the solvent in this step, any agglomerates of the second bismuth compound should preferably be crushed using an ultrasonic device or any other device so that no agglomerates remain. To the resulting cloudy solution containing the dispersed second bismuth compound is added the first phosphate ester, and stirring and heating are started.

The materials may be stirred at a temperature (reaction temperature) corresponding to the temperature of reflux of the aliphatic hydrocarbon solvent or aromatic solvent. To produce the first bismuth compound with much less coloration, the materials are preferably stirred at an oil bath temperature of 30 to 150°C, more preferably 40 to 140°C, even more preferably 45 to 120°C.

At a reaction temperature of 30 to 110°C, the reaction system is preferably maintained at a reduced pressure so that the water produced can be removed from the reaction system (dewatering conditions). During this process, the second bismuth compound and the first phosphate ester may be mixed while water is removed, or they may be mixed and then subjected to removal of water. For efficient reaction, they are preferably mixed and then subjected to removal of water during the reaction.

They may be reacted for any suitable period of time. In general, they may be reacted for 1 hour or more and 6 hours or less.

In view of operation, they may be reacted in any of an air atmosphere, an inert gas atmosphere, or a dry air atmosphere. For ease of operation, they are preferably reacted in an air atmosphere.

After the completion of the reaction under the conditions described above, the resulting first bismuth compound is preferably concentrated by removal of the solvent and then subjected to separation of insoluble turbidity components, if any, by filtration or centrifugation. The concentrated reaction solution resulting from this process is then subjected to reprecipitation and purification through adding, to the solution, a solvent that is soluble in the reaction solvent and will not dissolve the first bismuth compound. If a high-boiling point solvent remains, it may be replaced with the precipitation solvent through repeated decantation for the purification. The remaining solvent may then be removed by distillation, which may be followed by vacuum drying to yield the first bismuth compound.

The curable composition according to an embodiment typically has a first bismuth compound content of 10 mass% or more and 65 mass% or less. With a higher first bismuth compound content, the curable composition will tend to produce a cured product with a higher ability to shield radiation. The curable composition preferably has a first bismuth compound content of 20 mass% or more, more preferably 30 mass% or more, even more preferably 35 mass% or more. With too high a first bismuth compound content, however, the curable composition may produce a cured product with reduced formability. The curable composition preferably has a first bismuth compound content of 55 mass% or less, more preferably 50 mass% or less, even more preferably 45 mass% or less.

### <Polymerizable Compound>

The curable composition according to an embodiment contains a monofunctional acrylate as the polymerizable compound. The curable composition containing a monofunctional acrylate can produce a cured product with high formability. In addition to the monofunctional acrylate, the curable composition may contain at least one radically polymerizable compound selected from the group consisting of a monofunctional methacrylate, a polyfunctional (meth)acrylate, a vinyl group-containing polymerizable compound, and an allyl group-containing polymerizable compound. The curable composition preferably further contains a polyfunctional (meth)acrylate. It should be noted that the first bismuth compound should not be counted as the polymerizable compound.

The polymerizable compound preferably has a boding point at 1 atm of 90°C or more. The curable composition containing a high-boiling-point polymerizable compound will tend to produce a cured product with reduced odor. The polymerizable compound preferably has a boiling point of 100°C or more, more preferably 140°C or more, even more preferably 180°C or more. The boiling point of the polymerizable compound may have any upper limit. The upper limit of the boiling point may be 200°C or less in an example and may be 300°C or less in another example. The boiling point of the polymerizable compound can be measured using, for example, thermogravimetric (TG) analysis. TG analysis can be performed using a simultaneous thermogravimetric-differential thermal analyzer (TG8120 manufactured by Rigaku), in which scanning may be performed under an air stream at a rate of temperature rise of 10°C/minute in a temperature range of room temperature to 500°C.

For example, the curable composition according to an embodiment may have a polymerizable compound content of 10 mass% or more and 80 mass% or less. The polymerizable compound content of the curable composition can be measured using, for example, ¹H NMR spectroscopy.

The curable composition according to an embodiment may contain a methacrylate and an acrylate as polymerizable compounds. In such a case, the curable composition according to an embodiment preferably has a ratio M11/M12 of the mass M11 of the methacrylate to the mass M12 of the acrylate of 0.01 or more and 10 or less. With an M11/M12 ratio within this range, the curable composition will tend to provide increased compatibility for the first bismuth compound and to produce a cured product with increased hardness. The ratio M11/M12 is preferably 0.02 or more and 5 or less, more preferably 0.05 or more and 3 or less.

### [Monofunctional Acrylate]

The monofunctional acrylate is a compound having one acryloyl group per molecule.

Examples of the monofunctional acrylate include compounds represented by Formula (I) below.

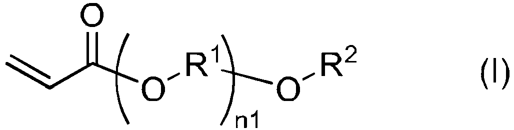

In Formula (I), R¹ is an alkylene group having 1 or more and 5 or less carbon atoms. R¹ is preferably a methylene group, an ethylene group, or an isopropylene group.

In Formula (I), R² is a hydrogen atom or an alkyl group having 1 or more and 5 or less carbon atoms. In Formula (I), R² may form a tetrahydrofurfuryl group together with the adjacent oxygen atom. R² is preferably a methyl group or an ethyl group or preferably forms a tetrahydrofurfuryl group together with the adjacent oxygen atom.

In Formula (I), n1 is an integer of 0 or more and 30 or less. In Formula (I), n1 may be 7 or more, 10 or more, or 15 or more.

Examples of the monofunctional acrylate include acrylic acid, acrylamide, phenyl acrylate, benzyl acrylate, isobutyl acrylate, methoxyethyl acrylate, ethoxyethyl acrylate, tetrahydrofurfuryl acrylate, isocyanatoethyl acrylate, acryloxymethyltrimethoxysilane, methoxypolyethylene glycol acrylate, phenoxydiethylene glycol acrylate, and ethoxylated-o-phenylphenol acrylate. The monofunctional acrylate preferably includes tetrahydrofurfuryl acrylate.

The curable composition according to an embodiment preferably has a monofunctional acrylate content of 10 mass% or more and 80 mass% or less. With a monofunctional acrylate content within this range, the curable composition will tend to produce a high-bismuth-content cured product with high formability and high toughness. The curable composition preferably has a monofunctional acrylate content of 15 mass% or more and 60 mass% or less, more preferably 20 mass% or more and 50 mass% or less.

The curable composition preferably has a ratio M1/M6 of the mass M1 of the first bismuth compound to the mass M6 of the monofunctional acrylate of 0.25 or more and 5.5 or less. With a higher M1/M6 ratio, the curable composition will tend to produce a cured product with a higher ability to shield radiation. With a lower M1/M6 ratio, the curable composition will tend to provide higher compatibility for the first bismuth compound and to provide higher formability. The ratio M1/M6 is preferably 1 or more and 3 or less.

### [Monofunctional Methacrylate]

The monofunctional methacrylate is a compound having one methacryloyl group per molecule.

Examples of the monofunctional methacrylate include compounds represented by Formula (III) below.

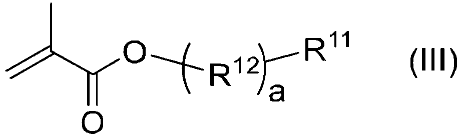

In Formula (III), R¹¹ is a hydroxy group, a linear or branched alkyl group having 1 or more and 10 or less carbon atoms, a linear or branched alkoxy group having 1 or more and 10 or less carbon atoms, a cycloalkyl group having 4 or more and 10 or less carbon atoms, a heterocycloalkyl group having 3 or more and 10 or less carbon atoms and having 1 or more and 3 or less heteroatoms, an aryl group having 4 or more and 10 or less carbon atoms, or a heteroaryl group having 3 or more and 10 or less carbon atoms and having 1 or more and 3 or less heteroatoms.

R¹¹ is preferably a linear or branched alkyl group having 1 or more and 10 or less carbon atoms, a linear or branched alkoxy group having 1 or more and 10 or less carbon atoms, or a heterocycloalkyl group having 3 or more and 10 or less carbon atoms and having 1 or more and 3 or less heteroatoms, more preferably a linear or branched alkoxy group having 1 or more and 10 or less carbon atoms or a heterocycloalkyl group having 3 or more and 10 or less carbon atoms and having 1 or more and 3 or less heteroatoms, even more preferably a methoxy group or a tetrahydrofuryl group.

In Formula (III), R¹² is a linear or branched alkylene group having 1 or more and 10 or less carbon atoms or an alkylene oxide group having 1 or more and 10 or less carbon atoms.

R¹² is preferably a linear or branched alkylene group having 1 or more and 10 or less carbon atoms, more preferably a methylene group or an ethylene group.

In Formula (III), a is 0 or 1. In Formula (III), a is preferably 1.

Examples of the monofunctional methacrylate include methacrylic acid, methacrylamide, phenyl methacrylate, benzyl methacrylate, isobutyl methacrylate, methoxyethyl methacrylate, ethoxyethyl methacrylate, and methacryloxy-methyltrimethoxysilane.

The curable composition according to an embodiment has a monofunctional methacrylate content of 20 mass% or less. With a higher monofunctional methacrylate content, the curable composition will tend to produce a cured product with higher hardness and lower flexibility. The curable composition preferably has a monofunctional methacrylate content of 10 mass% or less, more preferably 5 mass% or less, even more preferably 1 mass% or less, and may have a monofunctional methacrylate content of 0 mass%. The monofunctional methacrylate content of the curable composition according to an embodiment may be 10 mass% or more and 20 mass% or less or 12 mass% or more and 16 mass% or less.

The curable composition may have a ratio M6/M7 of the mass M6 of the monofunctional acrylate to the mass M7 of the monofunctional methacrylate of 0.1 or more and 10 or less. With an M6/M7 ratio within this range, the curable composition will tend to provide high compatibility for the first bismuth compound and to produce a cured product with increased hardness. The ratio M6/M7 may be 0.5 or more and 5 or less or 1 or more and 3 or less. The curable composition containing a combination of the methacrylate and the acrylate will tend to easily produce a rubber-like cured product with increased toughness and more remarkable flexibility.

The curable composition may have a ratio M1/M7 of the mass M1 of the first bismuth compound to the mass M7 of the monofunctional methacrylate of 1 or more and 10 or less. With a higher M1/M7 ratio, the curable composition will tend to produce a cured product with a higher ability to shield radiation. With a lower M1/M7 ratio, the curable composition will provide higher compatibility for the first bismuth compound. The ratio M1/M7 may be 2 or more and 5 or less.

### [polyfunctional (Meth)acrylate]

The polyfunctional (meth)acrylate is a compound having two or more acryloyl groups per molecule, having two or more methacryloyl groups per molecule, or having one or more acryloyl groups and one or more methacryloyl groups per molecule. The curable composition containing the polyfunctional (meth)acrylate will tend to produce a cured product with higher mechanical properties, such as higher impact resistance.

In view of solubility, composition viscosity, and cured product impact resistance, the polyfunctional (meth)acrylate is preferably a di(meth)acrylate represented by Formula (II) below.

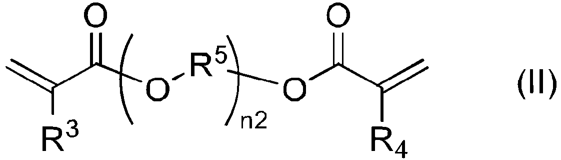

In Formula (II), R³ and R⁴ are each independently a hydrogen atom or a methyl group.

In Formula (II), R⁵ is a linear or branched alkylene group having 1 or more and 10 or less carbon atoms. R⁵ is preferably a methylene group, an ethylene group, or an isopropylene group.

In Formula (II), n2 is an integer of 1 or more and 50 or less. In Formula (II), n2 may be 7 or more, 10 or more, 15 or more, or 20 or more.

Examples of the di(meth)acrylate represented by Formula (II) include polyethylene glycol dimethacrylate, polyethylene glycol diacrylate, polypropylene glycol dimethacrylate, polypropylene glycol diacrylate, poly(tetramethylene glycol) dimethacrylate, poly(tetramethylene glycol) diacrylate, ethoxylated glycerin diacrylate, pentaerythritol diacrylate, ethoxylated glycerin dimethacrylate, and pentaerythritol dimethacrylate.

The curable composition according to an embodiment preferably has a polyfunctional (meth)acrylate content of 5 mass% or more and 35 mass% or less. With a higher polyfunctional (meth)acrylate content, the curable composition will tend to produce a cured product with higher impact resistance. With a lower polyfunctional (meth)acrylate content, the curable composition will tend to provide higher compatibility for the first bismuth compound. The polyfunctional (meth)acrylate content is more preferably 10 mass% or more and 30 mass% or less, even more preferably 15 mass% or more and 25 mass% or less and may be 21 mass% or less. The polyfunctional (meth)acrylate content can be measured using, for example, NMR spectroscopy. The measurement conditions for NMR may be the same as shown above.

The curable composition preferably has a ratio M1/M3 of the mass M1 of the first bismuth compound to the mass M3 of the polyfunctional (meth)acrylate of 1 or more and 10 or less. With a higher M1/M3 ratio, the curable composition will tend to produce a cured product with a higher ability to shield radiation. With a lower M1/M3 ratio, the curable composition will tend to produce a cured product with higher impact resistance. The ratio M1/M3 is preferably 1.5 or more and 5 or less.

### [Additional Polymerizable Compound]

The curable composition may contain any additional polymerizable compound. Examples of such an additional polymerizable compound include a vinyl group-containing polymerizable compound and an allyl group-containing polymerizable compound.

Examples of the vinyl group-containing polymerizable compound include vinylpyridine, vinylpyrrolidone, methylstyrene and structural isomers thereof, methoxystyrene and structural isomers thereof, methylstyrene dimers, chlorostyrene, bromostyrene, divinylbenzene, and other styrene derivatives.

Examples of the allyl group-containing polymerizable compound include allyl methyl carbonate, allyl phenyl ether, 4-allyloxytoluene, allyloxytrimethylsilane, allyl benzoate, allyl methacrylate, and allyl glycidyl ether.

The curable composition according to an embodiment may contain 10 mass% or less of a nitrile compound. The nitrile compound content of the curable composition is preferably 5 mass% or less, more preferably 3 mass% or less, even more preferably 1 mass% or less. With a lower nitrile compound content, the curable composition will tend to produce a cured product with a lower level of odor. The content of the nitrile compound in the curable composition may have a lower limit of 100 ppm by mass or more in an example and may have a lower limit of 0 mass% in another example. The nitrile compound content can be measured using, for example, ¹H NMR spectroscopy. The NMR measurement conditions may be the same as shown above.

Examples of the nitrile compound include acrylonitrile, methacrylonitrile, crotononitrile, 2-chloroacrylonitrile, 2-cyanoethyl acrylate, allyl cyanide, allyl cyanoacetate, fumaronitrile, and 5-norbornene-2-carbonitrile.

The curable composition according to an embodiment may contain a polymerizable compound having a boiling point of less than 90°C (hereinafter also referred to as the "second polymerizable compound"). The curable composition preferably has a second polymerizable compound content of 20 mass% or less, more preferably 10 mass% or less, even more preferably 5 mass% or less. With a lower second polymerizable compound content, the curable composition will tend to produce a cured product with a lower level of odor. The second polymerizable compound content of the curable composition may have a lower limit of 1 mass% or more in an example and may have a lower limit of 0 mass% in another example. The second polymerizable compound content can be measured using, for example, ¹H NMR spectroscopy.

### <Additional Components>

The curable composition according to an embodiment may contain a known additive, a coordinating organic compound, or a terpen in addition to the first bismuth compound and the polymerizable compound.

### [Additive]

Examples of the additive include a radical polymerization initiator, an antioxidant, a mold release agent for increasing mold releasability, a colorant for adjusting the cured product color, a chain transfer agent for controlling polymerization performance, a plasticizer for forming a cured product with plasticity, heat resistance, or cold resistance, an antioxidizing agent for durability improvement, and an age resister.

The content of each additive in the curable composition may be any level that will not compromise the effect of the present invention. Specifically, the curable composition preferably contains 0 to 30 parts by mass, more preferably 0.01 to 20 parts by mass, even more preferably 0.02 to 15 parts by mass of each additive, based on 100 parts by mass of the total amount of the first bismuth compound and the polymerizable compound.

### [Coordinating Organic Compound]

The coordinating organic compound is capable of coordinating with bismuth and can function as an odor suppressant and a viscosity adjuster for the cured product. The coordinating organic compound preferably has an acid dissociation constant pKa of 2.0 or more and 15.0 or less. The coordinating organic compound with an acid dissociation constant pKa within this range will tend form a curable composition capable of producing a cured product with a low yellowness index and less odor. The acid dissociation constant pKa of the coordinating organic compound may be 3 or more, 4 or more, or 6 or more. The acid dissociation constant pKa of the coordinating organic compound may be 14 or less, 11 or less, or 10 or less. The acid dissociation constant pKa refers to that in water. For example, the acid dissociation constant pKa can be determined by titration experiments or calculated by assuming state conditions. Specifically, the acid dissociation constant pKa may be the result of calculation using Software V11.02 (ACD/Labs) shown in SciFinder-n. For unified calculation of the physical property indicator, each compound may be assumed to be in water.

The coordinating organic compound preferably has a molecular weight (relative molecular mass) of 17 or more and 400 or less. The coordinating organic compound with a molecular weight within this range would easily coordinate with bismuth. The coordinating organic compound more preferably has a molecular weight of 18 or more and 300 or less, even more preferably 28 or more and 200 or less.

The coordinating organic compound preferably has a boiling point at 1 atm of 20°C or more and 500°C or less. The coordinating organic compound with a boiling point within this range will tend to form a curable composition capable of producing a cured product with a lower level of odor. The coordinating organic compound more preferably has a boiling point of 30°C or more and 400°C or less, even more preferably 120°C or more and 360°C or less.

The curable composition according to an embodiment preferably has a ratio M1/M2 of the mass M1 of the first bismuth compound to the mass M2 of the coordinating organic compound of 10 or more and 700 or less. With a higher M1/M2 ratio, the curable composition will tend to produce a cured product with a higher ability to shield radiation. With a lower M1/M2 ratio, the curable composition will tend to produce a cured product with less odor. The ratio M1/M2 is more preferably 15 or more and 300 or less, even more preferably 20 or more and 100 or less. The ratio M1/M2 can be determined using, for example, ¹H NMR spectroscopy.

With a higher coordinating organic compound content, the curable composition according to an embodiment will tend to easily produce a cured product with less odor. The coordinating organic compound content of the curable composition is preferably 0.1 mass% or more, more preferably 0.5 mass% or more, even more preferably 1.0 mass% or more. With too high a coordinating organic compound content, however, the curable composition according to an embodiment may produce a cured product with a reduced ability to shield radiation. The coordinating organic compound content of the curable composition is preferably 20 mass% or less, more preferably 10 mass% or less, even more preferably 5 mass% or less.

Examples of the coordinating organic compound include an imidazole skeleton-containing compound, a pyrazole skeleton-containing compound, a triazole skeleton-containing compound, a tetrazole skeleton-containing compound, a compound having an unsaturated bond and at least one heteroatom selected from the group consisting of nitrogen, oxygen, and sulfur, an unsaturated dicarboxylic acid, an unsaturated carboxylic acid ester, and an unsaturated carboxylic acid anhydride. It should be noted that the coordinating organic compound should not be counted as the polymerizable compound even through it has a radically polymerizable group such as a (meth)acryloyl group.

The coordinating organic compound preferably includes at least one selected from the group consisting of an imidazole skeleton-containing compound, a pyrazole skeleton-containing compound, a triazole skeleton-containing compound, and a tetrazole skeleton-containing compound.

The imidazole skeleton-containing compound has a skeleton represented by Formula (a) below.

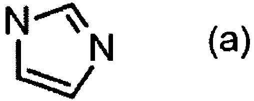

Examples of the imidazole skeleton-containing compound include imidazole, 1-vinylimidazole, 1-allylimidazole, N-acetylimidazole, benzimidazole, 1-methylimidazole, 1-ethylimidazole, 1-propylimidazole, 1-cyanomethylimidazole, 1-(3-aminopropyl)imidazole, 2-methylimidazole, 2-methyl-1-vinylimidazole, 2-hydroxymethy-1-methylimidazole, 4-hydroxymethyl-5-methylimidazole, 2-formyl-1-vinylimidazole, 2-ethylimidazole, 2-propylimidazole, 2-chloroimidazole, 2-nitroimidazole, 4-nitroimidazole, 4-methylimidazole, 4-fluoroimidazole, 2-formylimidazole, 2-ethyl-4-imidazole, 4-formylimidazole, 4-ethylimidazole, 4-cyanomethylimidazole, 2-imidazolecarboxylic acid, 4-imidazolecarboxylic acid, 1-isopropylimidazole, 2-isopropylimidazole, and 1,2-dimethylimidazole. The imidazole skeleton-containing compound preferably includes at least one compound selected from the group consisting of imidazole, 1-vinylimidazole, 1-allylimidazole, 2-methylimidazole, N-acetylimidazole, trimethylsilylimidazole, and 1,2-dimethylimidazole, and more preferably includes imidazole.

The pyrazole skeleton-containing compound has a skeleton represented by Formula (b) below.

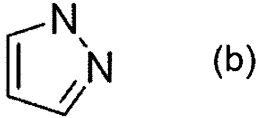

Examples of the pyrazole skeleton-containing compound include pyrazole, 1-methylpyrazole, 1-ethylpyrazole, 1-isopropylpyrazole, 1-nitropyrazole, 3-methylpyrazole, 3-aminopyrazole, 3-nitropyrazole, 4-methylpyrazole, 4-aminopyrazole, 4-chloropyrazole, 4-nitropyrazole, 3-amino-1-methylpyrazole, 3-amino-5-methylpyrazole, 3-amino-5-hydroxypyrazole, 5-amino-1-methylpyrazole, 5-hydroxy-1-methylpyrazole, 1,2-dihydropyrazole-3-one, 3-formylpyrazole, 1,3-dimethylpyrazole, 1,5-dimethylpyrazole, 3,5-dimethylpyrazole, 3-amino-4-cyanopyrazole, 4-formyl-1-methylpyrazole, 1,3,5-trimethylpyrazole, 5-amino-1,3-dimethylpyrazole, 5-amino-1-ethylpyrazole, pyrazole-4-carboxylic acid, pyrazole-3-carboxylic acid, and 5-(hydroxymethyl)-1-methylpyrazole. The pyrazole skeleton-containing compound preferably includes pyrazole.

The term "triazole skeleton-containing compound" includes compounds having a 1,2,3-triazole skeleton and compounds having a 1,2,4-triazole skeleton.

The compound having a 1,2,3-triazole skeleton has a skeleton represented by Formula (c) below.

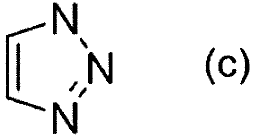

Examples of the compound having a 1,2,3-triazole skeleton include 1,2,3-triazole, 1H-benzotriazole, and 2H-benzotriazole. The compound having a 1,2,3-triazole skeleton preferably includes 1,2,3-triazole.

The compound having a 1,2,4-triazole skeleton has a skeleton represented by Formula (d) below.

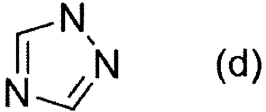

Examples of the compound having a 1,2,4-triazole skeleton include 1,2,4-triazole, 3-methyl-1H-1,2,4-triazole, 3-amino-1,2,4-triazole, 4-amino-1,2,4-triazole, 1-hydroxymethyl-1,2,4-triazole, 3,5-dimethyl-1,2,4-triazole, 3,5-amino-1,2,4-triazole, and methyl 1,2,4-triazole-3-carboxylate. The compound having a 1,2,4-triazole skeleton preferably includes 1,2,4-triazole.

The tetrazole skeleton-containing compound has a skeleton represented by Formula (e) below.

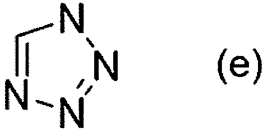

Examples of the tetrazole skeleton-containing compound include tetrazole, 1-methyl-1H-tetrazole, 5-methyltetrazole, 5-amino-1H-tetrazole, 5-amino-1-methyltetrazole, and 5-(2-pyridyl)-1H-tetrazole. The tetrazole skeleton-containing compound preferably includes tetrazole.

For example, the coordinating organic compound may include a compound having an unsaturated bond and at least one heteroatom selected from the group consisting of nitrogen, oxygen, and sulfur. This type of coordinating organic compound typically has 1 or more and 5 or less heteroatoms, preferably one or two heteroatoms. Examples of this type of coordinating organic compound include imidazole skeleton-containing compounds listed above, allyl isonicotinate, 2-dimethylaminoethyl acrylate, 2-dimethylaminoethyl methacrylate, indole, carbazole, 1,2-benzoisothiazol-3(2H)-one, heliotropin, allyl cyanurate, triallyl isocyanurate, triallylamine, 2-(tert-butylamino)ethyl acrylate, and 2-(tert-butylamino)ethyl methacrylate.

For example, the coordinating organic compound may include an unsaturated dicarboxylic acid. Examples of the unsaturated dicarboxylic acid include maleic acid, fumaric acid, citraconic acid, mesaconic acid, 2-pentenedioic acid, methylene succinic acid, allylmalonic acid, isopropylidene succinic acid, 2,4-hexadienedioic acid, and acetylene dicarboxylic acid. The unsaturated dicarboxylic acid preferably includes maleic acid.

For example, the coordinating organic compound may include an unsaturated carboxylic acid ester. Examples of the unsaturated carboxylic acid ester include 2-dimethylaminoethyl acrylate, 2-dimethylaminoethyl methacrylate, and diallyl maleate. The unsaturated carboxylic acid ester preferably includes at least one compound selected from the group consisting of 2-dimethylaminoethyl acrylate and 2-dimethylaminoethyl methacrylate.

For example, the coordinating organic compound may include an unsaturated carboxylic acid anhydride. Examples of the unsaturated carboxylic acid anhydride include acrylic anhydride, methacrylic anhydride, and maleic anhydride.

Preferred examples of the coordinating organic compound include at least one compound selected from the group consisting of imidazole, 1-vinylimidazole, 1-allylimidazole, N-acetylimidazole, trimethylsilylimidazole, pyrazole, triazole, 1H-tetrazole, 1,2,3-benzotriazole, benzimidazole, allyl isonicotinate, 2-dimethylaminoethyl acrylate, 2-dimethylaminoethyl methacrylate, 2-[2-hydroxy-5-[2-(methacryloyloxy)ethyl]phenyl]-2H-benzotriazole, indole, carbazole, 2-methylimidazole, 4-methylimidazole, 1,2-benzoisothiazol-3(2H)-one, 2-isopropylimidazole, 1,2-dimethylimidazole, l-menthol, heliotropin, triallyl cyanurate, triallyl isocyanurate, triallylamine, 2-(tert-butylamino)ethyl acrylate, 2-(tert-butylamino)ethyl methacrylate, 4-acryloylmorpholine, triacryloylhexahydrotriazine, dimethylpyrazole, linalool, camphor, acrylic acid, methacrylic acid, maleic acid, acrylic anhydride, methacrylic anhydride, and maleic anhydride.

The coordinating organic compound preferably includes at least one compound selected from the group consisting of imidazole, 2-methylimidazole, 1-vinylimidazole, 2-dimethylaminoethyl acrylate, 2-dimethylaminoethyl methacrylate, triallylamine, and maleic anhydride.

In this regard, the carboxylic acid anhydride may be used as a precursor of the carboxylic acid. The acid dissociation constant pKa of the carboxylic acid anhydride may be assumed to be that of the corresponding carboxylic acid.

The coordinating organic compound preferably includes a first coordinating organic compound and a second coordinating organic compound different from the first coordinating organic compound. The curable composition containing two or more different coordinating organic compounds can have further reduced odor due to the synergistic effect of the coordinating organic compounds.

The coordinating organic compound preferably includes: an imidazole skeleton-containing compound; and at least one compound selected from the group consisting of a pyrazole skeleton-containing compound, a triazole skeleton-containing compound, a tetrazole skeleton-containing compound, a compound having an unsaturated bond and at least one heteroatom selected from the group consisting of nitrogen, oxygen, and sulfur, an unsaturated dicarboxylic acid, an unsaturated carboxylic acid ester, and an unsaturated carboxylic acid anhydride. The curable composition containing the imidazole skeleton-containing compound will tend to have low viscosity and high handleability.

The mixture of two or more coordinating organic compounds preferably has an imidazole skeleton-containing compound content of 10 mass% or more, more preferably 25 mass% or more, even more preferably 40 mass% or more. The imidazole skeleton-containing compound content may be 90 mass% or less in an example and may be 60 mass% or less in another example.

The coordinating organic compound preferably includes: an unsaturated carboxylic acid anhydride; and at least one compound selected from the group consisting of an imidazole skeleton-containing compound, a pyrazole skeleton-containing compound, a triazole skeleton-containing compound, a tetrazole skeleton-containing compound, a compound having an unsaturated bond and at least one heteroatom selected from the group consisting of nitrogen, oxygen, and sulfur, an unsaturated dicarboxylic acid, and an unsaturated carboxylic acid ester. The unsaturated carboxylic acid anhydride will tend to provide an increased water absorption capacity.

The mixture of two or more coordinating organic compounds preferably has an unsaturated carboxylic acid anhydride content of 10 mass% or more, more preferably 25 mass% or more, even more preferably 40 mass% or more. The unsaturated carboxylic acid anhydride content may be 90 mass% or less in an example and may be 60 mass% or less in another example.

The coordinating organic compound preferably includes both an imidazole skeleton-containing compound and an unsaturated carboxylic acid anhydride. The coordinating organic compound may only include an imidazole skeleton-containing compound and an unsaturated carboxylic acid anhydride or may further include an additional coordinating organic compound in addition to them.

### [Terpene]

Terpenes are hydrocarbons composed of isoprene units and can function as odor suppressants for the cured product. The term "terpene" includes terpenes and their derivatives.

In the curable composition, the terpene may include at least one compound selected from the group consisting of a semiterpene, a semiterpene derivative, a monoterpene, a monoterpene derivative, a sesquiterpene, and a sesquiterpene derivative. The terpene preferably includes at least one compound selected from the group consisting of a monoterpene, a monoterpene derivative, a sesquiterpene, and a sesquiterpene derivative, and more preferably includes at least one compound selected from the group consisting of a monoterpene and a monoterpene derivative. Each of the derivatives may have a functional group, such as a hydroxy group or a carbonyl group.

The terpene preferably includes at least one compound selected from the group consisting of a monocyclic monoterpene, a monocyclic monoterpene derivative, a bicyclic monoterpene, and a bicyclic monoterpene derivative. The curable composition containing one or more of these monoterpenes will tend to produce a cured product with much less odor.

Examples of the terpene include (-)-α-pinene, (-)-β-pinene, (±)-camphene, α-terpinene, limonene, phenetole, p-cymene, terpinolene, 1,8-cineole, linalool, (+)-camphor, l-menthol, d-menthol, 1,4-cineole, norpinene, α-phellandrene, fenchone, borneol, and citronellol.

The terpene preferably includes at least one selected from the group consisting of (-)-α-pinene, (-)-β-pinene, (±)-camphene, α-methylstyrene, α-terpinene, limonene, phenetole, p-cymene, terpinolene, 1,8-cineole, linalool, (+)-camphor, and l-menthol, and more preferably includes at least one selected from the group consisting of (-)-α-pinene, (-)-β-pinene, (±)-camphene, α-methylstyrene, limonene, phenetole, p-cymene, linalool, and (+)-camphor.

The terpene preferably has a boiling point at 1 atm of 95°C or more and 250°C or less. The curable composition containing the terpene with a boiling point within this range will tend to produce a cured product with much less odor. The terpene more preferably has a boiling point of 100°C or more and 220°C or less, even more preferably 150°C or more and 210°C or less. The boiling point of the terpene can be measured using, for example, a boiling point meter.

The curable composition according to an embodiment preferably has a ratio M1/M2 of the mass M1 of the first bismuth compound to the mass M2 of the terpene of 10 or more and 700 or less. With a higher M1/M2 ratio, the curable composition will tend to produce a cured product with a higher ability to shield radiation. With a lower M1/M2 ratio, the curable composition will tend to produce a cured product with less odor. The ratio M1/M2 is preferably 15 or more and 300 or less, more preferably 20 or more and 100 or less.

With a higher terpene content, the curable composition according to an embodiment will tend to easily produce a cured product with less odor. The terpene content of the curable composition is preferably 0.1 mass% or more, more preferably 0.5 mass% or more, even more preferably 1.0 mass% or more. With too high a terpene content, however, the curable composition may produce a cured product with a reduced ability to shield radiation. The terpene content of the curable composition is preferably 20 mass% or less, more preferably 10 mass% or less, even more preferably 5 mass% or less. The terpene content can be measured using, for example, ¹H NMR spectroscopy.

### <Method for Preparing the Curable Composition>

The curable composition according to an embodiment can be prepared by mixing the first bismuth compound, the polymerizable compound, and optionally additional components.

### <<Resin Composition>>

An embodiment is directed to a resin composition including bismuth and a (meth)acrylic resin. The resin composition is, for example, a cured product resulting from curing of the curable composition according to an embodiment described above.

The resin composition according to an embodiment preferably has a bismuth content of 20 mass% or more and 50 mass% or less. The bismuth content can be measured using high-frequency inductively coupled plasma (ICP) emission spectroscopy. The bismuth content may be 25 mass% or more and 40 mass% or less. The resin composition may include the (meth)acrylic resin as the remainder.

The resin composition according to an embodiment may have a peak at a wave number between 1670 and 1700 cm⁻¹ as measured by infrared (IR) spectroscopy. The resin composition having such a peak may be considered to contain a compound having a bismuth-phosphate ester bond. This peak is considered characteristic of stretching vibration in Bi-O-P.

The resin composition according to an embodiment has a Shore D hardness of 70 or less. The resin composition having a Shore D hardness of 70 or less can have rubber-like elasticity. The Shore D hardness of the resin composition may be 60 or less, 55 or less, 50 or less, or 40 or less. The Shore D hardness of the resin composition may have any lower limit. The Shore D hardness of the resin composition may have a lower limit of 10 or more in an example and may have a lower limit of 20 or more in another example.

The Shore D hardness of the resin composition according to an embodiment is measured by a method according to JIS K 7215. A test piece of the resin composition for the measurement of the shore D hardness may be 50 mm in longitudinal size, 50 mm in transverse size, and 5.7 mm in thickness. A stack of two test pieces of the resin composition may be tested and evaluated.

For example, the resin composition according to an embodiment may have an elastic modulus of 5 MPa or more and 50 MPa or less. The elastic modulus of the resin composition may be 40 MPa or less, 30 MPa or less, or 20 MPa or less.

For example, the resin composition according to an embodiment may have a maximum elongation of 1% or more and 50% or less. The maximum elongation of the resin composition may be 10% or more, 15% or more, or 20% or more.

For example, the resin composition according to an embodiment may have a maximum stress of 0.1 MPa or more and 5.0 MPa or less. The maximum stress of the resin composition may be 1.0 MPa or more, 1.5 MPa or more, or 2.0 MPa or more.

For example, the resin composition according to an embodiment may have a maximum test force of 50 N or more. The maximum test force of the resin composition may be 80 N or more, 100 N or more, or 150 N or more. The maximum test force of the resin composition may have any upper limit. The maximum test force of the resin composition may have an upper limit of 500 N or less in an example and may have an upper limit of 300 N or less in another example.

For example, the resin composition according to an embodiment may have a maximum stroke of 1 mm or more. The maximum stroke of the resin composition may be 5 mm or more, 10 mm or more, or 15 mm or more. The maximum stroke of the resin composition may have any upper limit. The maximum stroke of the resin composition may have an upper limit of 34 mm or less in an example and may have an upper limit of 30 mm or less in another example.

The elastic modulus, maximum elongation, maximum stress, maximum test force, and maximum stroke of the resin composition according to an embodiment can be determined from a stress-strain curve (SS curve) obtained using a tensile tester. The size of the test piece of the resin composition may be 20 mm in width, 100 mm in length, and 5.7 mm in thickness. The tensile speed may be 10 mm/minute.

### <<Cured Product>>

An embodiment is directed to a cured product including a product resulting from curing of the curable composition according to an embodiment described above. The cured product may be produced using any known method. Specifically, the cured product may be produced using one or both of photopolymerization and thermal polymerization methods. What is a preferred polymerization method may be determined depending on the radical polymerization initiator, which is added as needed to the curable composition.

### <Physical Properties of the Cured Product>

The cured product according to an embodiment contains a high concentration of bismuth, which has a high ability to shield radiation, such as X-rays, and is highly transparent, highly flexible, and less colored. When 2 mm-thick, for example, the cured product will have a transmittance of 80% or more at a wavelength of 560 nm, an X-ray shielding effect equivalent to that of a 0.02 mm-thick lead foil, and a yellowness index of 40 or less.

The cured product may have a bismuth content of 5 to 40 mass% based on the total mass of the cured product, which is normalized to 100 mass%.

### <Uses of the Cured Product>

The cured product according to an embodiment is transparent and less colored and thus may be used as an optical article. The cured product has an ability to shield radiation, even though transparent to visible light, and thus may be used as a transparent radiation-shield material. Moreover, the cured product can be produced in the form of a flexible sheet with a large area, which can be easily shaped depending on the intended use or target.

The optical article including the cured product according to an embodiment may be used as a radiation shielding window, a radiation shielding lens, or a sheet for radiation protection curtains.

The lens or sheet including the cured product according to an embodiment may be used to form radiation shielding eyeglasses, radiation shields, or other products.

The cured product according to an embodiment has antibacterial and antiviral properties and thus may be used for applications requiring high hygiene.

### EXAMPLES

Hereinafter, the present invention will be described in detail with reference to some examples and comparative examples. It will be understood that the examples below are not intended to limit the present invention.

### <Method for Analysis of the First Bismuth Compound>

IR measurement of the first bismuth compound was performed using a Fourier transform infrared spectrophotometer (Spectrum One manufactured by PerkinElmer). The IR measurement was performed under the conditions of single reflection ATR and a number of scans of 4. A peak was observed at 1697 cm⁻¹ in the resulting spectrum of the first bismuth compound.

TG-DTA measurement of the first bismuth compound was performed using a simultaneous thermogravimetric-differential thermal analyzer (TG8120 manufactured by Rigaku). In the measurement, scanning was performed under an air stream at a rate of temperature rise of 10°C/minute in a temperature range of room temperature to 500°C.

Raman scattering measurement of the first bismuth compound was performed using a micro-Raman spectrometer (NRS-7100 manufactured by JASCO) under the conditions of a 532 nm laser for sample excitation, a 100× objective lens, 600 line/mm grating, φ25 um and φ4000 µm apertures, and 20 second exposure time × 2.

¹H-NMR and ³¹P-NMR measurements of the first bismuth compound were performed using a nuclear magnetic resonance spectrometer (JNM-ECA400II manufactured by JEOL). The measurements were performed under the conditions of deuterated acetone solvent and a sample concentration of 1 mass%.

XPS measurement of the first bismuth compound was performed using an X-ray photoelectron spectrometer (ESCA5701ci/MC manufactured by ULVAC-PHI). The measurement conditions were as follows: X ray source, monochromatic Al-Kα (14kV-330W); aperture diameter, φ800 µm; and photoelectron extraction angle, 45 degrees. The sample was crushed in an agate mortar, and the resulting powder was fixed to a substrate with a carbon tape and introduced into the chamber for measurement.

MALDI-TOF-MS measurement of the first bismuth compound was performed using rapiflex TOF/TOF manufactured by Bruker. The matrix was prepared using CHCA (α-cyano-4-hydroxycinnamic acid), DIT (dithranol), and DHB (2,5-dihydroxybenzoic acid), and the cationizing agent was sodium trifluoroacetate. The measurement was performed under the conditions of reflector/positive mode and mass range m/z = 20-4000. As a result, the compounds of Formulas (3a), (3b), and (3f) were identified.

### <Production Example 1: Production of Phosphate Ester-Bonded Bismuth-Containing Composition (First Bismuth Compound)>

A 1000 mL eggplant flask was charged with 94.27 g of bismuth(III) subsalicylate (containing 260.35 mmol of bismuth, manufactured by Sigma-Aldrich), 33.06 g of a mixture of bis[2-(methacryloyloxyethyl)] phosphate (a phosphate diester) and (2-methacryloyloxy)ethyl phosphate (a phosphate monoester) (the mixture was MR-200 manufactured by DAIHACHI Chemical Industry with a phosphate value of 162.04 mmol), 33.09 g of diphenyl-2-methacryloyloxyethyl phosphate (a phosphate triester) (MR-260 manufactured by DAIHACHI Chemical Industry, 91.33 mmol), 6.17g of dibutylhydroxytoluene (BHT) (a polymerization inhibitor) (special grade reagent manufactured by FUJIFILM Wako Pure Chemical), and 750 mL of toluene. The materials were subjected to ultrasonic dispersion using a bath sonicator to form a cloudy solution.

The resulting cloudy solution was transferred to a 1000 mL four-necked flask equipped with a Dean-Stark trap and then subjected to reaction in an oil bath at 130°C with heating and stirring while the water produced was removed from the system. The reaction endpoint was determined when no more water was produced. The reaction product was a pale yellow turbid solution with a slight amount of pale yellow precipitates.

The solution was concentrated to 250 mL using a vacuum evaporator. To the concentrate was added 8g of alumina powder and allowed to stand overnight. The mixture was then subjected to suction filtration using 5B filter paper. To the resulting pale yellow turbid filtrate was added 3 g of activated carbon (Darco G60 manufactured by Norit), and the mixture was centrifuged at 23830 × g for 8 hours. The resulting supernatant was filtered under pressure through a 0.2 µm pore size membrane filter to give a pale yellow transparent filtrate. The solvent was removed from the resulting solution using a vacuum evaporator, and the residue was redissolved in 250 mL of acetone. To the resulting pale yellow solution was added 3 g of activated carbon (Norit SX-Plus manufactured by Norit), and the mixture was centrifuged at 23830 × g for 12 hours. The resulting supernatant was filtered under pressure through a 0.2 µm pore size membrane filter to give a pale yellow transparent filtrate. The resulting filtrate was concentrated to 100 mL using a vacuum evaporator. An acetone solution of the concentrate was added under stirring to 800 mL of hexane in a 1000 mL conical beaker. The resulting white precipitate was separated by suction filtration using 5B filter paper. The resulting solid was dried under vacuum. As a result, 64.40 g of a phosphate ester-bonded bismuth-containing composition was obtained as a white powder. The synthesis completion was confirmed using the measurement method described above.

### <Example 1>

To 40 parts by mass of the phosphate ester-bonded bismuth-containing composition (referred to as "Bi compound" in the tables) obtained in Production Example 1 were added 14.9 parts by mass of methoxyethyl methacrylate (MEMA), 21.4 parts by mass of tetrahydrofurfuryl acrylate (THFAA), and 22.2 parts by mass of nonaethylene glycol dimethacrylate (9G) as polymerizable compounds. To the resulting mixture was added 0.9 parts by mass of imidazole as a coordinating organic compound. To the mixture were further added 0.6 parts by mass of a methylstyrene dimer (MSD) and 0.01 parts by mass of KF-353A as additional additives and uniformly dissolved to form a curable composition. To the curable composition were further added 0.9 parts by mass of 2,2'-azobis(2-methylbutyronitrile) (V-59) and 0.05 parts by mass of 1,1'-azobis(cyclohexane-1-carbonitrile) (V-40) and dissolved completely. From the curable composition, the dissolved oxygen was removed under reduced pressure using a vacuum pump. The resulting curable composition was then injected into a 3 mm-thick space between two glass sheets (110 mm × 300 mm) fixed and spaced apart with 3 mm-square silicone resin cords and subjected to a polymerization process including: heating it to a maximum temperature of 90°C over 15 hours; and holding it at 90°C for 2 hours to form a pale yellow transparent cured product.

### <Examples 2 to 5 and Comparative Examples 1 to 5>

Pale yellow transparent cured products were obtained as in Example 1 except that the components other than 2,2'-azobis(2-methylbutyronitrile) (V-59) and 1,1'-azobis(cyclohexane-1-carbonitrile) (V-40) were changed as shown in Table 1 below.

### <Evaluation>

The cured products obtained in Examples 1 to 5 and Comparative Examples 1 to 5 were measured for Shore D hardness and evaluated for formability. The results are shown in Table 1.

### [Shore D Hardness]

The cured products obtained in Examples 1 to 5 and Comparative Examples 1 to 5 were measured for Shore D hardness in accordance with JIS K 7215. The measurement device used was a digital durometer (DD4 manufactured by Kobunshi Keiki) attached to a motorized constant loader (CLE-150 manufactured by Kobunshi Keiki), in which the needle was dropped at a speed of 1 cm/second when the value was read. The measurement was performed three times, and the average value was used as the Shore D hardness of the cured product.

### [Formability]

The cured products obtained in Examples 1 to 5 and Comparative Examples 1 to 5 were evaluated for formability. Specifically, the cured product was subjected to a test in which it was held at both longitudinal ends by hands and bent at its longitudinal center when its formability was evaluated according to the criteria below.

### -Evaluation Criteria-

1: The ends are successfully brought into contact with each other, and the cured product quickly returns to its original sheet shape without cracking when released from the hands.
2: The ends are successfully brought into contact with each other, and the cured product returns to its original sheet shape when released from the hands.
3: The ends are successfully brought into contact with each other, but the cured product is cracked when bent.
4: The cured product ruptures when bent so that both ends are in contact with each other, or is impossible to bend by hands.

**[Table 1]**

| | Curable composition | | | | | | | | | | Cured product | | |
|---|---|---|---|---|---|---|---|---|---|---|---|---|---|
| | Bi compou nd | MEMA | THFAA | 9G | MMA | MSD | Styren e | Imidaz ole | (±)-Camphe ne | KF-353A | Shore D hardne ss | Formabi lity | Radiati on shieldi ng ability |
| | Parts by mass | Parts by mass | Parts by mass | Parts by mass | Parts by mass | Parts by mass | Parts by mass | Parts by mass | Parts by mass | Parts by mass | | | |
| Example 1 | 40 | 14.9 | 21.4 | 22.2 | - | 0.6 | - | 0.9 | - | 0.01 | 52.2 | 1 | Present |
| Example 2 | 43 | 13.9 | 20.4 | 21.2 | - | 0.6 | - | 0.9 | - | 0.01 | 51.2 | 1 | Present |
| Example 3 | 45 | 13.2 | 19.7 | 20.5 | - | 0.6 | - | 1 | 1 | 0.01 | 59.7 | 1 | Present |
| Example 4 | 44 | 12.9 | 21.5 | 20.1 | - | 0.6 | - | 1 | - | 0.01 | 61.0 | 1 | Present |
| Example 5 | 42 | 14.4 | 20.6 | 21.4 | - | 0.6 | - | 1.3 | - | 0.01 | 68.0 | 1 | Present |
| Comparative Example 1 | 50 | 13.0 | 6.5 | 14.0 | 16.0 | 0.5 | - | - | - | 0.01 | 79.0 | 4 | Present |
| Comparative Example 2 | 10 | 13.0 | 6.5 | 14.0 | 56.0 | 0.5 | - | - | - | 0.01 | 87.4 | 4 | Present |
| Comparative Example 3 | 0 | 38.3 | 19.7 | 41.2 | - | 0.8 | - | - | - | 0.01 | 32.1 | 1 | Absent |
| Comparative Example **4** | 0 | 19.0 | 9.8 | 70.4 | - | 0.8 | - | - | - | 0.01 | 40.7 | 1 | Absent |
| Comparative Example 5 | 0 | 13.0 | 6.5 | 14.0 | - | 0.5 | 66.0 | - | - | 0.01 | 84.0 | 4 | Absent |

In Table 1, the codes denote the components below.
MEMA: Methoxyethyl methacrylate
THFAA: Tetrahydrofurfuryl acrylate
9G: Nonaethylene glycol dimethacrylate
MMA: Methyl methacrylate
MSD: Methylstyrene dimer
KF-353A: Silicone-based mold release agent

Table 1 shows that each of the curable compositions of Examples 1 to 5, which includes the first bismuth compound and a monofunctional acrylate and has a monofunctional methacrylate content of at most 20 mass%, has successfully produced a low-hardness, flexible cured product.

### <Examples 6 to 30>

Pale yellow transparent cured products were obtained as in Example 1 except that the components other than 2,2'-azobis(2-methylbutyronitrile) (V-59) and 1,1'-azobis(cyclohexane-1-carbonitrile) (V-40) were changed as shown in Table 2 below.

### <Evaluation>

The cured products obtained in Examples 6 to 30 were measured for Shore D hardness and evaluated for formability in the same manner as for the cured product of Example 1. The results are shown in Table 2. The cured products of Examples 6 to 18 and 20 to 30 were also measured for mechanical properties as shown below. The results are shown in Table 3.

### [Mechanical Properties of Cured Products]

The cured products obtained in Examples 6 to 18 and 20 to 30 were measured for elastic modulus, maximum elongation, maximum stress, maximum test force, and maximum stroke by the method shown below. A 20 mm-wide, 100 mm-long, 5.7 mm-thick test piece of the cured product was mounted to the grip of a tensile tester (AGS-500N with a cell capacity of 500 N manufactured by Shimadzu) and pulled at one end at a speed of 10 mm/minute until it broke for the creation of a stress-strain curve. The stress-strain curve was used to determine the elastic modulus from the resulting slope at the initial tensile stage, to determine the maximum test force from the maximum force applied during the test, and to determine the maximum stress, maximum elongation, and maximum stroke.

**[Table 2]**

| | Curable composition | | | | | | | | | Cured product | |
|---|---|---|---|---|---|---|---|---|---|---|---|
| | Bi compou nd | MSD | THFAA | AM-90G | AM-130G | 222 MEEEA | A-400 | A-1000 | Imidaz ole | Shore D hardne ss | Formabi lity |
| | Parts by mass | Parts by mass | Parts by mass | Parts by mass | Parts by mass | Parts by mass | Parts by mass | Parts by mass | Parts by mass | | |
| Example 6 | 50 | 0.3 | 48.9 | - | - | - | - | - | 0.8 | 51.0 | 1 |
| Example 7 | 50 | 0.3 | 38.9 | - | - | - | - | 10 | 0.8 | 49.5 | 1 |
| Example 8 | 50 | 0.3 | 40.9 | - | 8 | - | - | - | 0.8 | 40.9 | 1 |
| Example 9 | 50 | 0.3 | 33.9 | 15 | - | - | - | - | 0.8 | 34.2 | 1 |
| Example 10 | 50 | 0.3 | 30.9 | - | 8 | - | - | 10 | 0.8 | 41.2 | 1 |
| Example 11 | 50 | 0.3 | 40.9 | 8 | - | - | - | - | 0.8 | 39.5 | 1 |
| Example 12 | 50 | 0.3 | 33.9 | - | 15 | - | - | - | 0.8 | 33.5 | 1 |
| Example 13 | 50 | 0.3 | 28.9 | 20 | - | - | - | - | 0.8 | 30.0 | 1 |
| Example 14 | 50 | 0.3 | 32 | - | 15 | - | - | 1.9 | 0.8 | 34.5 | 1 |
| Example 15 | 50 | 0.3 | 32 | 15 | - | - | - | 1.9 | 0.8 | 34.8 | 1 |
| Example 16 | 50 | 0.3 | 27 | 20 | - | - | - | 1.9 | 0.8 | 30.5 | 1 |
| Example 17 | 50 | 0.3 | 26 | - | 20 | - | - | 2.9 | 0.8 | 29.2 | 1 |
| Example 18 | 50 | 0.3 | 27 | - | 20 | - | - | 1.9 | 0.8 | 30.1 | 1 |
| Example 19 | 50 | 0.3 | 21 | 25 | - | - | - | 2.9 | 0.8 | 26.2 | 1 |
| Example 20 | 50 | 0.3 | - | - | - | 28.9 | 20 | - | 0.8 | 42.0 | 3 |
| Example 21 | 50 | 0.3 | 38.9 | - | - | - | 10 | - | 0.8 | 53.0 | 3 |
| Example 22 | 50 | 0.3 | 23.9 | 15 | - | - | - | 10 | 0.8 | 35.0 | 3 |
| Example 23 | 50 | 0.3 | 23.9 | 20 | - | - | - | 5 | 0.8 | 30.6 | 3 |
| Example 24 | 50 | 0.3 | 18.9 | 25 | - | - | - | 5 | 0.8 | 28.0 | 3 |
| Example 25 | 50 | 0.3 | 23.9 | - | 20 | - | - | 5 | 0.8 | 30.0 | 2 |
| Example 26 | 50 | 0.3 | 18.9 | 15 | 15 | - | - | - | 0.8 | 22.1 | 3 |
| Example 27 | 50 | 0.3 | 18.9 | - | 25 | - | - | 5 | 0.8 | 27.2 | 2 |
| Example 28 | 50 | 0.3 | 22 | - | 25 | - | - | 1.9 | 0.8 | 26.0 | 2 |
| Example 29 | 50 | 0.3 | 22 | 25 | - | - | - | 1.9 | 0.8 | 27.0 | 3 |
| Example 30 | 50 | 0.3 | 17 | 30 | - | - | - | 1.9 | 0.8 | 24.0 | 3 |

In Table 2, the codes denote the components below.
MSD: Methylstyrene dimer
THFAA: Tetrahydrofurfuryl acrylate
AM-90G: Methoxypolyethylene glycol acrylate with a degree of polymerization of ethylene glycol of 9
AM-130G: Methoxypolyethylene glycol acrylate with a degree of polymerization of ethylene glycol of 13
222MEEEA: 2-[2-(2-Methoxyethoxy)ethoxy]ethyl acrylate
A-400: Methoxypolyethylene glycol diacrylate with a degree of polymerization of ethylene glycol of 9
A-1000: Methoxypolyethylene glycol diacrylate with a degree of polymerization of ethylene glycol of 23

**[Table 3]**

| | Elastic modulus (MPa) | Maximum elongation (%) | Maximum stress (MPa) | Maximum test force (N) | Maximum stroke (mm) |
|---|---|---|---|---|---|
| Example 6 | 19 | >42 | 4.4 | >500 | >34 |
| Example 7 | 19 | 24 | 3.1 | 339 | 19 |
| Example 8 | 11 | 29 | 2.6 | 276 | 23 |
| Example 9 | 9 | 22 | 1.6 | 172 | 17 |
| Example 10 | 19 | 15 | 2.0 | 208 | 12 |
| Example 11 | 11 | 30 | 2.5 | 284 | 24 |
| Example 12 | 9 | 19 | 1.5 | 166 | 15 |
| Example 13 | 11 | 17 | 1.3 | 144 | 14 |
| Example 14 | 13 | 12 | 1.1 | 129 | 9 |
| Example 15 | 11 | 21 | 2.0 | 222 | 17 |
| Example 16 | 13 | 11 | 1.1 | 125 | 9 |
| Example 17 | 11 | 14 | 1.2 | 129 | 11 |
| Example 18 | 13 | 16 | 1.6 | 179 | 13 |
| Example 20 | 40 | 4 | 1.3 | 151 | 3 |
| Example 21 | 35 | 12 | 2.6 | 318 | 10 |
| Example 22 | 19 | 13 | 1.7 | 193 | 11 |
| Example 23 | 14 | 13 | 1.4 | 158 | 10 |
| Example 24 | 14 | 13 | 1.3 | 144 | 10 |
| Example 25 | 15 | 13 | 1.3 | 140 | 11 |
| Example 26 | 7 | 10 | 0.5 | 62 | 8 |
| Example 27 | 12 | 11 | 1.1 | 127 | 9 |
| Example 28 | 11 | 10 | 0.8 | 96 | 8 |
| Example 29 | 12 | 11 | 1.0 | 114 | 9 |
| Example 30 | 13 | 12 | 1.1 | 131 | 9 |

Tables 2 and 3 show that each of the curable compositions of Examples 6 to 30, which includes the first bismuth compound and a monofunctional acrylate and has a monofunctional methacrylate content of at most 20 mass%, has successfully produced a low-hardness, flexible cured product.

## Claims

1. A resin composition comprising: bismuth; and a (meth)acrylic resin, and
having a Shore D hardness of 70 or less as measured in accordance with JIS K 7215.

2. The resin composition according to claim 1, wherein the resin composition has a Shore D hardness of 20 or more and 60 or less.

3. The resin composition according to claim 1, wherein the resin composition exhibits an elastic modulus of 5 MPa or more and 50 MPa or less when shaped into a test piece with a length of 100 mm, a width of 20 mm, and a thickness of 5.7 mm and pulled at one end at a rate of 10 mm/minute using a tensile tester.

4. The resin composition according to claim 1, wherein the resin composition has a bismuth content of 20 mass% or more and 50 mass% or less as analyzed by high-frequency inductively coupled plasma emission spectrometry.

5. A curable composition comprising: a first bismuth compound comprising bismuth and a (meth)acryloyl group; and at least one polymerizable compound excluding the first bismuth compound,
the at least one polymerizable compound comprising a monofunctional acrylate,
the curable composition having a first bismuth compound content of 10 mass% or more and 65 mass% or less,
the curable composition having a monofunctional methacrylate content of 20 mass% or less.

6. The curable composition according to claim 5, wherein the curable composition has a monofunctional acrylate content of 10 mass% or more and 80 mass% or less.

7. The curable composition according to claim 5, wherein a ratio M1/M6 of a mass M1 of the first bismuth compound to a mass M6 of the monofunctional acrylate is 0.25 or more and 5.5 or less.

8. The curable composition according to claim 5, wherein the curable composition has a first bismuth compound content of 30 mass% or more and 55 mass% or less.

9. The curable composition according to claim 5, wherein the first bismuth compound comprises a compound having two or more (meth)acryloyl groups.

10. The curable composition according to claim 5, wherein the curable composition has a monofunctional methacrylate content of 10 mass% or less.

11. The curable composition according to claim 5, wherein the monofunctional acrylate comprises a compound represented by Formula (I): 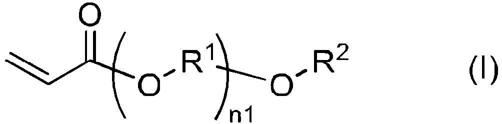 wherein
R¹ is an alkylene group having 1 or more and 5 or less carbon atoms,
R² is a hydrogen atom or an alkyl group having 1 or more and 5 or less carbon atoms and may form a tetrahydrofurfuryl group together with an adjacent oxygen atom, and
n1 is an integer of 0 or more and 30 or less.

12. The curable composition according to claim 5, wherein the at least one polymerizable compound further comprises a polyfunctional (meth)acrylate having two or more (meth)acryloyl groups.

13. The curable composition according to claim 12, wherein the curable composition has a polyfunctional (meth)acrylate content of 10 mass% or more and 35 mass% or less.

14. The curable composition according to claim 12, wherein the polyfunctional (meth)acrylate comprises a bifunctional (meth)acrylate represented by Formula (II): 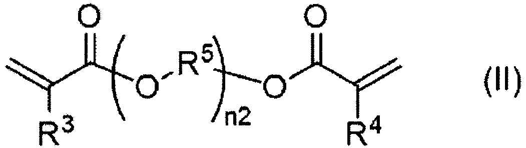 wherein
R³ and R⁴ are each independently a hydrogen atom or a methyl group,
R⁵ is a linear or branched alkylene group having 1 or more and 10 or less carbon atoms, and
n2 is an integer of 1 or more and 50 or less.

15. The curable composition according to claim 5, further comprising a coordinating organic compound having an acid dissociation constant pKa of 2.0 or more and 15.0 or less.

16. The curable composition according to claim 15, wherein the coordinating organic compound comprises at least one selected from the group consisting of an imidazole skeleton-containing compound, a pyrazole skeleton-containing compound, a triazole skeleton-containing compound, and a tetrazole skeleton-containing compound.

17. A cured product comprising a product resulting from curing of the curable composition according to any one of claims 5 to 16.

18. An optical article comprising the cured product according to claim 17.

19. A rubber sheet comprising the cured product according to claim 17.

20. An eye protector comprising the cured product according to claim 17.

21. An antibacterial or antiviral agent comprising the cured product according to claim 17.
